# EUROPEAN PATENT SPECIFICATION

(11) **EP 2 402 474 B1**
(45) Date of publication and mention of the grant of the patent: **23.10.2013**
(21) Application number: 10746261.6
(22) Date of filing: 25.02.2010
(51) Int. Cl.: C23C 4/06, F16J 9/26

(54) **PISTON RING**
KOLBENRING
GARNITURE DE PISTON

(30) Priority: 26.02.2009 JP 2009044157
(43) Date of publication of application: 04.01.2012
(73) Proprietor: Nippon Piston Ring Co., Ltd., Saitama-shi Saitama 338-8503 (JP)
(72) Inventor: AIZAWA, Takeshi c/o Nippon Piston Ring Co., Ltd., Saitama-shi Saitama 338-0003 (JP); KUBO, Takasumi c/o Nippon Piston Ring Co. Ltd., Saitama-shi Saitama 338-0003 (JP); OMIYA, Takao c/o Nippon Piston Ring Co., Ltd., Saitama-shi Saitama 338-0003 (JP)
(74) Representative: Klunker . Schmitt-Nilson . Hirsch
(86) International application number: PCT/JP2010/052951
(87) International publication number: WO 2010/098382

(56) References cited:
- JP-A- 62 112 745
- JP-A- 63 195 254
- JP-A- 2005 155 711
- JP-A- 2007 314 839

## Description

### [Field of the Invention]

The present invention relates to a piston ring, more particularly, a piston ring having a thermal spray coating formed thereon, which coating is excellent in wear resistance, scuffing resistance and initial running-in property as well as less damaging to a mating material, according to the preamble of claim 1 and as it is disclosed in JP 2007314839 A.

### [Background Art]

Recently, internal-combustion engines have become higher-powered and higher-performance, which makes the environment where sliding members such as piston rings are used still more severe. Sliding members are thus demanded to have a good wear resistance and scuffing resistance.

In order to improve the wear resistance and the scuffing resistance of a sliding member such as a piston ring for internal-combustion engines, for example, the sliding surface of a piston ring for automobiles is subjected to a surface treatment such as PVD coating or nitrided layer. Among these surface treatments, in particular, PVD coating provides an excellent wear resistance, and therefore is widely used in practice as a surface treatment for piston rings used under severe operating conditions.

In the case of a large piston ring for ships etc., the sliding surface is subjected to a surface treatment such as coating of hard chrome plating or ceramic coating by plasma spraying technique. Among these surface treatments, in particular, cermet thermal spray coating which consists of a hard ceramic phase such as chromium carbide and a metal phase formed by the plasma spraying technique has an excellent wear resistance and scuffing resistance.

Patent Document 1 to 4 below are the prior art references concerning a plasma spray coating. Patent Document 1 discloses a sliding member for which a good wear resistance and scuffing resistance are demanded. The sliding member has on its surface a thermal sprayed layer formed by plasma spraying of a mixed powder of 80 to 40 wt% of Ni-based self-fluxing alloy powder including Cr, B, Si, C, Fe, Co and 20 to 60 wt% of Mo powder. Patent Document 2 discloses a piston ring having a base thermal spray coating with a high peel resistance which is formed on an outer periphery and a top thermal spray coating with an excellent wear resistance and scuffing resistance which is formed on the base thermal spray coating. The piston ring has the base thermal spray coating that has a thermal spray material including 60 to 80 wt% of Mo with a particle size of not less than 44 µm to less than 125 µm and 20 to 40% of Ni-based self-fluxing alloy with a particle size of not less than 10 µm to less than 64 µm, and that has a thickness of 20 to 100 µm. Patent Document 3 discloses a thermal spray coating sliding material which has a Mo metal phase, or not less than 10 vol% of Mo metal phase and a metal phase and/or alloy phase including one or more of Fe, Ni, Co, Cr, Cu and Zn. According to Patent Document 3, the metal phase and/or alloy phase improves the adhesion, the toughness of the coating, and the fineness.

Patent Document 4 discloses a piston ring having a thermal sprayed film on its sliding surface, which coating has a NiCr alloy phase and a hard ceramic phase including chromium carbide. The piston ring has the thermal spray coating of which porosity is not more than 1%. According to Patent Document 4, in this thermal sprayed film, damage to a mating material caused by the hard ceramic phase can be reduced by making its porosity be not more than 1% using HVOF spraying or HVAF spraying technique. Patent Document 5 discloses a piston ring having on its sliding surface a thermal spray coating having a structure in which Mo, NiCr alloy and a cermet region including chromium carbide are mixed. According to Patent Document 5, this thermal spray coating has an excellent wear resistance and scuffing resistance as well as is less damaging to a mating material.

### [Prior Art References]

### [Patent References]

Patent Document 1: Japanese Laid-Open Patent Application No. JP 59-150080 A
Patent Document 2: Japanese Laid-Open Patent Application No.JP 03-260474 A
Patent Document 3: Japanese Laid-Open Patent Application No.JP 2004-346417 A
Patent Document 4: Japanese Laid-Open Patent Application No.JP 2005-155711 A
Patent Document 5: Japanese Laid-Open Patent Application No.JP 2007-314839 A

### [Summary of the Invention]

### [The Problems Solved by the Invention]

In the case of a large piston ring for ships etc., a thermal spray coating is often formed on its sliding surface, and it is important for such a large piston ring to have both characteristics that the wear of the piston ring per se is small (wear resistance) and that the wear of the mating material of the piston ring is small (less damaging to a mating material). Particularly, in the case of a piston ring for ships, the scuffing resistance and decreased wear of bores, which are the mating material of piston rings, tend to be more emphasized than the wear resistance of a piston ring per se, because a ship runs while replacing piston rings at regular intervals. Moreover, after replacement of piston rings, it is demanded that the initial running-in property to bores should be excellent.

However, piston rings disclosed in the above-mentioned Patent Documents 1 to 5 cannot fulfill such demands. For example, in cases of the thermal spray coatings disclosed in Patent Documents 1 to 3, the initial running-in property is not good enough, and damage to a mating material is not sufficiently small. In cases of the piston rings disclosed in Patent Documents 4 and 5, although they have an excellent wear resistance based on a hard ceramic phase such as chromium carbide, the piston rings are still highly damaging to a mating material. Their scuffing resistance and initial running-in property are also insufficient. Thus, development of a thermal spray coating which ensures an excellent wear resistance, scuffing resistance and initial running-in property of a piston ring as well as ensures small damage to a mating material has been demanded.

The present invention has been completed to solve the above-described problems. The object of the present invention is to provide a piston ring having a thermal spray coating formed thereon, which coating has an excellent wear resistance and scuffing resistance as well as ensures small damage to a mating material.

### [Problem Resolution Means]

The piston ring according to the present invention has a thermal spray coating formed on a sliding surface of the piston ring, the thermal spray coating being formed by thermal spraying of a mixed powder including at least Mo powder, Ni-based self-fluxing alloy powder and Cu and/or Cu alloy powder, characterized in that the thermal spray coating at least includes 50 to 80 % by mass of Mo, 1 to 12 % by mass of Cu and/or Cu alloy, and a remainder being Ni-based self-fluxing alloy, and the area ratio of Cu and/or Cu alloy phase that appears on the sliding surface is 0.5 to 15%. The phrase "appears on the sliding surface" as used herein means that it appears on a surface obtained after polishing the sliding surface per se from the top of the sliding surface.

In the present invention, a thermal spray coating includes: Mo as a base metal, which is a high melting point metal and has an excellent wear resistance and scuffing resistance; a self-fluxing, Ni-based alloy as a binder; and Cu and/or Cu alloy dispersed therein. According to the present invention, the wear resistance can be more improved by using Ni-based self-fluxing alloy as a binder. The initial running-in property can also be improved and damage to a mating material can be reduced by dispersing Cu and/or Cu alloy between Mo and Ni-based self-fluxing alloy. In addition, a Cu and/or Cu alloy phase which has an excellent initial running-in property always appears on the sliding surface of the thermal spray coating at an area ratio of 0.5 to 15%, and therefore an improved scuffing resistance can also be obtained.

In the piston ring according to the present invention, the area ratio of the Cu and/or Cu alloy phase which appears on a cross-section of the thermal spray coating is preferably 0.1 to 10%.

In the piston ring according to the present invention, the porosity of the thermal spray coating is preferably not more than 8%.

In the piston ring according to the present invention, the Cu and/or Cu alloy phase has a flattened shape caused by being stretched in the in-plane direction in the sliding surface and being compressed in the direction normal to the sliding surface.

It is preferred that the piston ring according to the present invention is used for a ship.

### [Efficacy of the Invention]

By the piston ring according to the present invention, Mo metal excellent in wear resistance and scuffing resistance is used together with Ni-based self-fluxing alloy as a binder, thereby improving the wear resistance still more. The dispersed Cu and/or Cu alloy can improve the initial running-in property as well as can reduce damage to a mating material. The thermal spray coating of the piston ring of the present invention ensures small damage to a mating material as well as an excellent initial running-in property, and therefore may be preferably applied to the sliding surface of piston rings, for example, a large piston ring for a ship, to be used while replacing the former.

### [Brief Descriptions of the Drawings]

Fig. 1 is a cross-sectional view showing an example of the piston ring according to the present invention.
Fig. 2 is a drawing for explaining the morphology of a Cu and/or Cu alloy phase which appears on the surface obtained after polishing the sliding surface of the thermal spray coating of the present invention.
Fig. 3 is a drawing for explaining the morphology of a Cu and/or Cu alloy phase which appears on the cross-section of the thermal spray coating of the present invention.
Fig. 4 is a drawing showing the constituting principle of a high-load type abrasion tester used for measurement of abrasion loss.
Fig. 5 is a drawing showing the constituting principle of a rotary type flat sliding friction tester used for measurement of scuffing load.

### [Embodiment of the Invention]

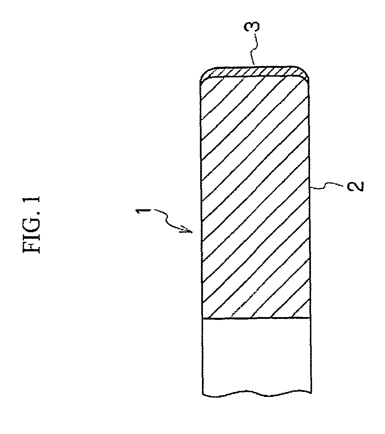

The piston ring according to the present invention will be described in detail. Fig. 1 is a cross-sectional view showing an example of the piston ring according to the present invention. As shown in Fig. 1, thermal spray coating 3 is formed on the outer periphery of sliding surface of piston ring base material 2.

### (Materials)

The piston ring according to the present invention has a sliding surface and a thermal spray coating formed on the sliding surface, and the thermal spray coating is formed by thermal spraying of a mixed powder including at least Mo powder, Ni-based self-fluxing alloy powder and Cu and/or Cu alloy powder. The thermal spray coating at least includes 50 to 80 % by mass of Mo, 1 to 12 % by mass of Cu and/or Cu alloy, and a remainder that is Ni-based self-fluxing alloy.

Examples of the piston ring base material on which the thermal spray coating is formed include various materials, e.g., boron cast iron, flake graphite cast iron, spheroidal graphite cast iron, CV cast iron, steel and the like.

The thermal spray coating is formed on the sliding surface of the piston ring by plasma spraying or HVOF spraying. In plasma spraying, by using a plasma jet generated by a plasma spray gun, a thermal spray material is heated and accelerated to melt and almost melt the material, and the molten or almost molten material sprayed on a substrate. The principle is as well known. When voltage is applied between the cathode and the anode, a DC arc is generated, which causes ionization of the working gas (such as an argon gas) fed from the backside to generate plasma. The thermal spray material is carried by an argon gas or the like into the generated plasma flame to be sprayed on a substrate, thereby forming a thermal spray coating on the substrate. HVOF (an abbreviation for High Velocity Oxygen Fuel) spraying is a thermal spraying by a high speed jet flame using oxygen and fuel. In particular, a mixed gas of high pressure oxygen and fuel is combusted in a combustion chamber to generate a combustion flame. The combustion flame is once narrowed through a nozzle. The moment the narrowed combustion flame is released into the atmosphere, the gas expansion is generated rapidly to produce a supersonic jet stream. The thermal spray material is accelerated by high acceleration energy, not being oxidized nor changed in composition almost at all, to form the high density thermal spray coating on the substrate.

As a thermal spray material, a material including at least: Mo powder which attains the Mo content in the formed thermal spray coating of 50 to 80% by mass; Cu powder and/or Cu alloy powder which attain(s) the Cu and/or Cu alloy content in the formed thermal spray coating of 1 to 12% by mass; and Ni-based self-fluxing alloy powder which makes the remainder of the coating Ni-based self-fluxing alloy is used. Because the content of each metal or alloy in the thermal spray coating is usually equal to the composition ratio of powder components in the thermal spray material, the content of each component in a thermal spray coating described above can be regarded as the ratio of each component in a thermal spray material. Therefore, the amount of powders which are included in a thermal spray material may be regulated to attain a desired component ratio in the thermal spray material.

Mo is a high melting point metal included in the thermal spray coating at an amount of 50 to 80% by mass. Because the thermal spray coating containing Mo has an excellent wear resistance and scuffing resistance, Mo is preferably used as a base metal for a thermal spray coating formed on a piston ring. The Mo content of less than 50% by mass makes the wear resistance and the scuffing resistance poor. On the other hand, the Mo content of more than 80% by mass leads to a high cost. It has been already confirmed that a desired wear resistance and scuffing resistance can be obtained by making the Mo content not less than 50% by mass and not more than 80% by mass. The Mo content is represented herein by a value measured with a backscattering measuring device. As a thermal spray material, Mo powder with an average particle diameter of 20 to 53 µm is preferably used, but the particle size is not restricted thereto. The average particle diameter of Mo powder is represented herein by a value measured with a particle size distribution analyzer.

Ni-based self-fluxing alloy is a self-fluxing alloy included as remainder in the thermal spray coating including Mo, Cu and/or Cu alloy, other metal(s) or alloy(s) optionally included and unavoidable contaminants, and serves as a binder of the base metal Mo. Moreover, a good wear resistance can be advantageously obtained by virtue of the fact that Ni-based self-fluxing alloy is a self-fluxing alloy. Examples of the Ni-based self-fluxing alloy include NiCr alloy, NiCo alloy and the like, and NiCr alloy is especially preferred. Because the content of Ni-based self-fluxing alloy is included as remainder in the thermal spray coating including Mo, Cu and/or Cu alloy, etc., its effect as a Mo binder may be lowered and the adhesion between molten Mo particles which are included in the thermal spray coating may decrease when the content of Ni-based self-fluxing alloy is less than 20% by mass. On the other hand, the scuffing resistance may be lowered when the content of Ni-based self-fluxing alloy is more than 50% by mass. However, the present invention is free from such a problem since the maximum content of the remainder (Ni-based self-fluxing alloy) of the thermal spray coating including e.g. 50% by mass of Mo and 1 % by mass of Cu and/or Cu alloy is 49% by mass. The content of Ni-based self-fluxing alloy described herein is also represented by a value measured with a backscattering measuring device. As a thermal spray material, Ni-based self-fluxing alloy powder with an average particle diameter of 15 to 53 µm is preferably used, but the particle size thereof is not restricted thereto. The average particle diameter of Ni-based self-fluxing alloy powder is represented herein by a value measured with a particle size distribution analyzer.

Cu and/or Cu alloy is (are) included in the thermal spray coating in an amount of 1 to 12% by mass. By virtue of Cu and/or Cu alloy included in Mo base metal including Ni-based self-fluxing alloy as a binder, the initial running-in property of the thermal spray coating is improved, which provides an excellent wear resistance and scuffing resistance, as well as damage to a mating member is reduced.

Examples of the Cu and/or Cu alloy include Cu, CuAlFe alloy (e.g. Cu-9Al-1Fe alloy), CuNi alloy and the like. Specifically, preferred are Cu and CuAlFe alloy, which may be used individually or in combination. In the case where they are used in combination, the total content of Cu and Cu alloy should be within the range described above. When the content of Cu and/or Cu alloy is less than 1 % by mass, a good initial running-in property is not obtained, and therefore the scuffing resistance may decrease. On the other hand, when the content of Cu and/or Cu alloy is more than 12% by mass, the Vickers hardness of the thermal spray coating decreases, which may result in a reduced wear resistance. It has been already confirmed that a good initial running-in property, scuffing resistance and wear resistance can be obtained by using Cu and/or Cu alloy at a content of not less than 1% by mass and not more than 12% by mass. The content of Cu and/or Cu alloy described herein is also represented by a value measured with a backscattering measuring device. As a thermal spray material, Cu powder and/or Cu alloy powder with an average particle diameter of 45 to 90 µm is preferably used, but the size is not restricted thereto. The average particle diameter of powders described herein is also represented by a value measured with a particle size distribution analyzer.

The thermal spray coating may be formed using a material powder to which other metal powder(s) and/or alloy powder(s) is (are) added other than these powders, as long as the feature of the present invention is not adversely affected.

### (Morphology of Cu and/or Cu Alloy Phase)

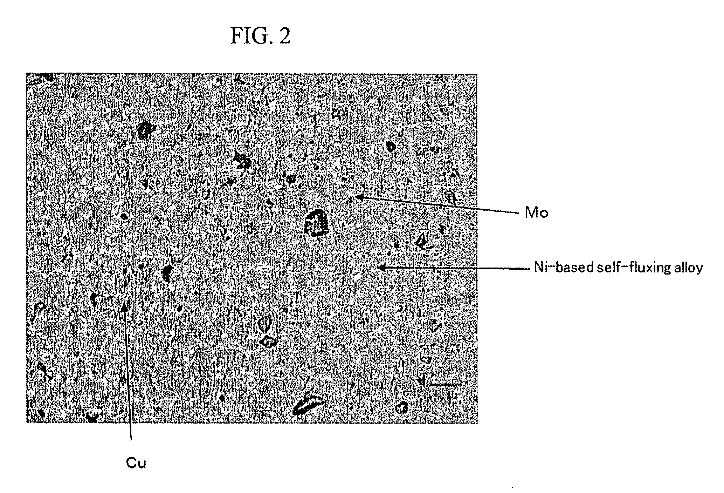

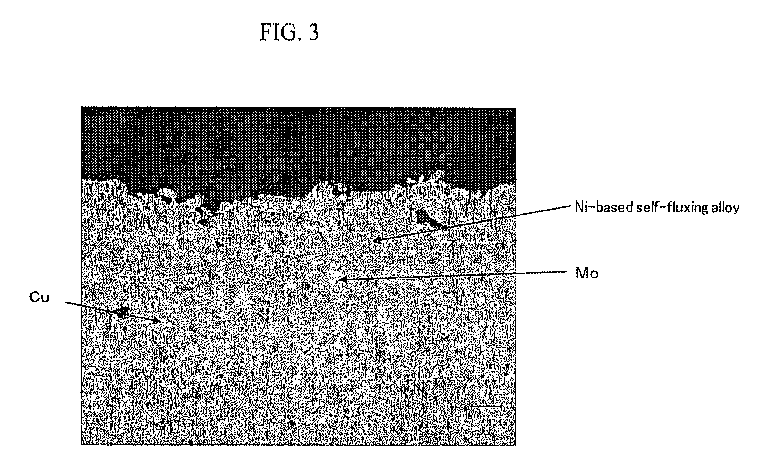

Fig. 2 is a drawing for explaining the morphology of Cu and/or Cu alloy phase which appears on the sliding surface of the obtained thermal spray coating. Fig. 3 is a drawing for explaining the morphology of Cu and/or Cu alloy phase which appears on the cross-section of the obtained thermal spray coating. The plain view in Fig. 2 is an observation of the surface which appears after polishing the sliding surface per se, and the cross-sectional view in Fig. 3 is an observation of the surface which appears after polishing the cross-section obtained by cutting the piston ring after formation of the thermal spray coating by a plane perpendicular to the sliding surface. The structures shown in Figs. 2 and 3 were observed with a metallographic microscope.

As shown in Figs 2 and 3, the thermal spray coating has: a Mo metal phase including Mo; a Ni-based self-fluxing alloy phase including Ni-based self-fluxing alloy; and a Cu and/or Cu alloy phase including Cu and/or Cu alloy. In particular, the Cu and/or Cu alloy phase has a flattened shape as shown in Figs. 2 and 3. The flattened shape has a flat stretched in the in-plane direction in the sliding surface. Further thickness of the flattened shape in the direction normal to the sliding surface is thin. The Cu and/or Cu alloy phase having such a flattened shape always appears on the sliding surface of the thermal spray coating in the state of being stretched in the sliding surface, and furthermore, exists in the state of being piled between a Mo metal phase and a Ni-based self-fluxing alloy phase in the direction of the thickness of the thermal spray coating as well as being distributed (dispersed) uniformly or approximately uniformly within thermal sprayed base layer 3.

The Cu and/or Cu alloy phase which appears on the sliding surface of the thermal spray coating in the state of being distributed (dispersed) uniformly or approximately uniformly exists not less than 0.5% and not more than 15% in terms of the area ratio. By virtue of the Cu and/or Cu alloy phase which constantly exists on the sliding surface worn due to sliding on a mating material in the state of being stretched in the in-plane direction and at an area ratio described above, the initial running-in property to a mating material is improved. The thermal spray coating having a good initial running-in property can improve the scuffing resistance. When the area ratio of Cu and/or Cu alloy phase is less than 0.5%, the initial running-in property to a mating material is not good enough, which may result in the insufficient scuffing resistance. When the area ratio of Cu and/or Cu alloy phase is more than 15%, the Vickers hardness decreases, which may result in the insufficient wear resistance. The phrase "appears on the sliding surface" means that it appears on a surface obtained after polishing the sliding surface per se from the top of the sliding surface.

The Cu and/or Cu alloy phase which appears on the sliding surface at an area ratio described above exists on the cross-section of the thermal spray coating at an area ratio of not less than 0.1% and not more than 10%. As shown in Fig. 3, the Cu and/or Cu alloy phase exists in the state of being compressed and piled up in the direction of the thickness of the thermal spray coating. In plasma spraying or HVOF spraying, which is typically used for formation of the thermal spray coating in the present invention, a thermal spray material in a molten or almost molten state is sprayed on the sliding surface of a piston ring. Therefore, the powder material thermally sprayed on the sliding surface is piled up on a substrate in the state of being pressed, and deposited on the sliding surface in the flattened shape as shown in Figs. 2 and 3. Thus, the Cu and/or Cu alloy phase included in the thermal spray coating exists at an area ratio of 0.5 to 15% when observed from a sliding surface side but exists at a lower area ratio of 0.1 to 10% when observed in the cross-section.

The size of the Cu and/or Cu alloy phase which exists in the thermal spray coating varies depending on from what direction it is observed. For example, as illustrated Fig. 2, the size was 20 µm to 150 µm when observed from the sliding surface side in the plan view; and as illustrated in Fig. 3, the size was also 20 µm to 150 µm when observed in the cross-section of the sliding surface. The size also varies depending on the size of a material powder and thermal spraying conditions used, and it is preferred that the size be approximately within the above-described range. It is understood that, even when the size observed in the plan view is equal to the size observed in the cross-section, the shapes are different from each other. Further, the Cu and/or Cu alloy phase has a relatively planar, flattened shape extending two-dimensionally when observed in the plan view, and is in the state of being thinly pressed in the direction of the thickness when observed in the cross-section. It is noted that the Cu and/or Cu alloy phase has a major axis and a minor axis, and the "size" is represented by the measured value of the major axis.

In the piston ring according to the present invention, it is preferred that the Vickers hardness of the thermal spray coating is 400 to 700 HV0.3, preferably 450 to 600 HV0.3, and that the Vickers hardness of the Cu and/or Cu alloy phase existing in the thermal spray coating at the above-described area ratio is 100 to 200 HV0.01. The Vickers hardness of the thermal spray coating and the Vickers hardness of the Cu and/or Cu alloy phase described above can be achieved by regulating the content of each metal component which is included in the thermal spray coating to be within the above-described range and by regulating the area ratio of the Cu and/or Cu alloy phase to be within the above-described range. The thermal spray coating having the Vickers hardness within the above-described range has a good wear resistance against a mating material. In addition, the Cu and/or Cu alloy phase having the Vickers hardness within the above-described range provides a good initial running-in property to and a good scuffing resistance against a mating material, and reduces damage to a mating material.

The Vickers hardness of the thermal spray coating is the hardness of the whole cross-section of the thermal spray coating in which Cu and/or Cu alloy is(are) dispersed, and was measured with a Vickers hardness tester at a 0.3 kgfload, which was evaluated using a unit of "HV0.3." The Vickers hardness of the Cu and/or Cu alloy phase is the hardness of the Cu and/or Cu alloy phase in the cross-section of the thermal spray coating in which Cu and/or Cu alloy is(are) dispersed, and was measured with a Vickers hardness tester at a 0.01 kgfload, which was evaluated using a unit of "HV0.01." It is noted that the average of the measured values obtained at randomly selected five sites is defined as the value of the Vickers hardness.

In the piston ring according to the present invention, the porosity of the thermal spray coating is preferably not more than 8% (area %). The thermal spray coating used in the present invention which includes a Cu and/or Cu alloy phase can attain the porosity of not more than 8%, compared to a thermal spray coating not including a Cu and/or Cu alloy phase. When the porosity of the thermal spray coating is more than 8%, cracking or stripping which starts from the voids may occur in the boundary between a thermal spray coating and a piston ring base material or within the thermal spray coating. In view of the wear resistance based on the fineness and the oil retention capacity of the thermal spray coating, it is more preferred that the porosity be not more than 6%. The lower limit of the porosity is not restricted, and may be, for example, 0.5%.

The thickness of the thermal spray coating is not restricted. When formed on the sliding surface of a large piston ring for a ship etc., the thickness of the thermal spray coating may be, for example, 150 µm to 800 µm. In the case of a piston ring for an automobile etc. whose size is not so large as those for a ship, the thickness may be arbitrary selected from a wide range between e.g. 100 µm to 300 µm, depending on the size etc. of the piston ring.

As explained hereinabove, in the thermal spray coating for the piston ring according to the present invention, a Mo phase which is a high melting point metal having an excellent wear resistance and scuffing resistance is used as a base metal; a Ni-based self-fluxing alloy phase such as NiCr is used as a binder; and a Cu and/or Cu alloy phase having a good initial running-in property is dispersed. According to the present invention having such components, the wear resistance can be further improved by using a Ni-based self-fluxing alloy phase as a binder, and an improved initial running-in property and scuffing resistance as well as reduced damage to a mating material can be attained by making a Cu and/or Cu alloy phase dispersed.

### Examples

The present invention will be described further in detail with reference to examples and comparative examples.

### [Example 1]

Mo metal powder with an average particle diameter of 50 µm, NiCr alloy powder with an average particle diameter of 40 µm, and Cu powder with an average particle diameter of 70 µm were mixed so that the content of the powders became 64% by mass, 35% by mass and 1% by mass, respectively, to prepare a thermal spray material. The component composition of the NiCr alloy is: Ni, 70.5% by mass; Cr, 17% by mass; Fe, 4% by mass; Si, 4% by mass; B, 3.5% by mass; and C, 1% by mass.

This thermal spray material was plasma-sprayed under the conditions described below to form a thermal spray coating having a thickness of 300 µm on the sliding surface of a piston ring including boron cast iron. The component composition of the thermal spray coating was quantified with a backscattering measuring device (manufactured by NHV Corporation) to find that the thermal spray coating had the following composition: Mo, 64% by mass; NiCr alloy, 35% by mass; and Cu, 1% by mass, which was the same as the composition of the thermal spray material.

### [Examples 2 to 6 and Comparative Examples 1 to 4]

A variety of the thermal spray coatings were formed on the sliding surface of the piston ring under the same thermal spraying conditions as in Example 1. Based on the material powder used in Example 1, the composition of the thermal spray material was changed by regulating the amount of each component to attain the respective component compositions shown in Table 1. The component composition of the obtained thermal spray coatings was measured in the same manner as in Example 1, and shown in Table 1, In Table 1, "CuAl" shown in the columns of Examples 5, 6 and Comparative Examples 3, 4 means that alloy powder of 90Cu-9Al-1Fe in terms of% by mass having an average particle diameter of 40 µm was used.

### [Conventional Examples 1 and 2]

Regulating the amount of each component to attain the component compositions shown in Table 1, the thermal spray coatings were formed on the sliding surface of the piston ring under the same thermal spraying conditions as in Example 1. "Cr3C2" shown in the column of Conventional Example 2 means that Cr3C2 powder having an average particle diameter of 30 µm was used.

### [Measurement and Evaluation]

The sliding surface area ratio, the cross-sectional area ratio and the Vickers hardness of the Cu phase or Cu alloy phase of the obtained thermal spray coatings were measured in the manner described below. The Vickers hardness, the wear resistance index, the wear resistance index of the mating material and the scuffing resistance index of the thermal spray coatings and Cu or Cu-Al-Fe alloys were measured in the manner described below, and evaluated. The results of evaluation were shown in Table 1.

### (Thermal Spraying Conditions)

Plasma-spraying conditions: Sulzer Metco, 9MB Plasma Spray Gun
   60 to 70V voltage
   500A current

### (Area Ratio)

As for the area ratio, the sliding surface of the obtained thermal spray coating was polished, and the image of the resulting surface was taken at a magnification of x200 with a metallographic microscope, followed by analyzing the image using an image analysis software, thereby measuring the area ratio of the Cu phase (which is referred to as "sliding surface area ratio"). On the other hand, a cross-section obtained by cutting the piston ring by a plane parallel to the normal line of the sliding surface (or in the axial direction of the ring) was polished, and the image of the cross-section was taken at the magnification of x200 with the metallographic microscope, followed by analyzing the image using the image analysis software, thereby measuring the area ratio of the Cu phase (which is referred to as "cross-sectional area ratio"). The obtained results were shown in Table 1. Polishing of the thermal spray coating was carried out using a series of progressively finer abrasive papers of 180,240,320,600,800 and 1200 grit, followed by buffing with 1.0 µm powder of alumina (aluminium oxide) for 20 seconds. The resulting polished surface was used as a sample for observation of area ratio.

### (Vickers Hardness)

In Table 1, values of the Vickers hardness of Cu or Cu-Al-Fe are results of measurements of the Vickers hardness of the Cu phase or the Cu-Al-Fe phase in the cross-section, and values of the Vickers hardness of the thermal spray coating are results of measurements of the Vickers hardness of the whole cross-section of the thermal spray coating which includes the Cu phase or the Cu-Al-Fe phase. Because a hard Mo metal phase and a soft Cu phase or Cu-Al-Fe phase coexist in the thermal spray coating, the values of the Vickers hardness of the thermal spray coating can be regarded as the average hardness of the whole thermal spray coating. Using a micro Vickers hardness tester (manufactured by Akashi), each of the Vickers hardness of Cu or Cu-Al-Fe was measured at a 0.01 kgf load, and each of the Vickers hardness of the thermal spray coatings was measured at a 0.3 kgfload. The Vickers hardness was represented by the average of the measured values obtained at randomly selected five sites.

### (Wear Resistance Index and Wear Resistance Index of Mating material)

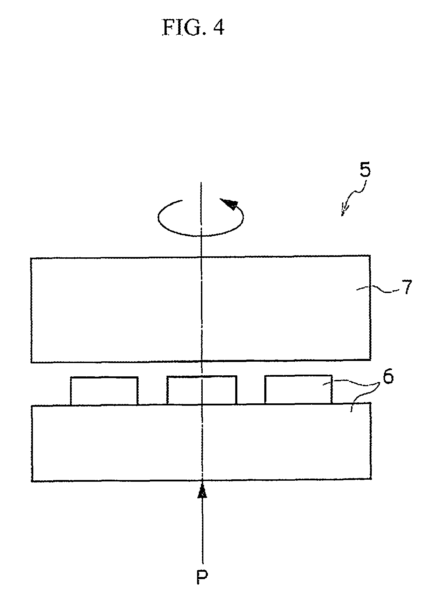

The wear resistance index and the wear resistance index of the mating material were measured by abrasion test. The abrasion test was carried out using a high-load type abrasion tester 5 shown in Fig. 4. Test samples 6 obtained under the same conditions as the piston rings obtained in the above-described Examples 1 to 6, Comparative Examples 1 to 4 and Conventional Examples 1 and 2 were used in this test as fixed pieces. Test samples 6 (fixed pieces) were brought into contact with mating material 7, which was a rotating piece, and a load P was applied to them. Test sample 6 used herein three pins formed by flake graphite cast iron (ϕ 5 mm, 58.9 mm2) and a disk with an outer diameter of 40 mm which was combined with the pins. The outer diameter of the disk was 40 mm, and the thickness of the test sample was 12 mm including the pins. Mating material 7 (rotating piece) was boron cast iron having an outer diameter of 40 mm and a thickness of 12 mm. The test was carried out under the following conditions: lubricating oil, an oil product corresponding to spindle oil; oil temperature, 125oC; peripheral speed, 1.65 m/sec (1050 rpm); contact pressure, 76.4 MPa; test time, 8 hours.

As for the wear resistance and the wear resistance of the mating material, the wear indices of the test samples corresponding to Examples 1 to 6, Comparative Examples 1 to 4 and Conventional Examples 2 were compared with the wear index of the test sample corresponding to Conventional Example 1, respectively, to obtain the relative ratio of the wear index of each test sample, which was defined as the wear resistance index. Hence, the test sample having a smaller wear resistance index below 100 is considered to be a sample whose abrasion loss is smaller. In the evaluation of the wear resistance index, the index of not less than 100 and less than 110 was evaluated as "single-circle (good)"; the index of not less than 110 and less than 120 was evaluated as "triangle (relatively poor)"; and the index of not less than 120 was evaluated as "cross mark (unacceptable)". In the evaluation of the wear resistance index of the mating material, the index of less than 80 was evaluated as "double-circle (excellent)"; the index of not less than 80 and less than 100 was evaluated as "single-circle (good)"; the index of not less than 100 and less than 120 was evaluated as "triangle (relatively poor)"; and the index of not less than 120 was evaluated as "cross mark (unacceptable)".

### (Scuffing Resistance Index)

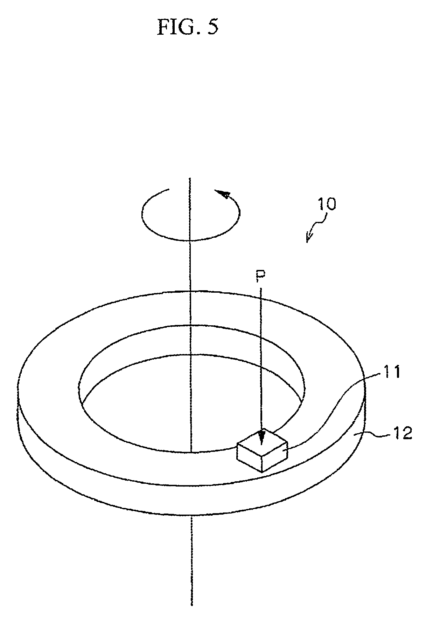

As for the scuffing resistance index, the critical face pressure for scuffing of each specimen 11 was measured with rotary type flat sliding friction tester 10 shown in Fig. 5. In the friction tester, specimen 11 was welded by a prescribed pressure (P) for a given period of time onto a rotating surface of mating material 12 which was rotating at a constant speed. The face pressure at which scuffing occurred was defined as a critical face pressure. Welding by pressure was carried out by keeping an initial pressure of 2.5 MPa for 30 minutes and then progressively increasing the face pressure from 5 MPa by 1 MPa at intervals of every 5 minutes. The measurement was carried out at a peripheral speed of 5 m/sec using a mixed oil of SAE30:kerosene =1:1 as a lubricating oil. The oil was applied only before the start of the test. Specimen 11 was flake graphite cast iron, and mating material 12 was boron cast iron.

As for the scuffing resistance, the scuff generating load of the test sample corresponding to Conventional Example 1 was taken as 100, and the scuff generating loads of the test samples corresponding to Examples 1 to 6, Comparative Examples 1 to 4, and Conventional Examples 2 were compared with the result of the test sample corresponding to Conventional Example 1, respectively, to obtain the scuffing resistance index. Therefore, the test sample having a greater scuffing resistance index above 100 is considered to be a sample whose scuff generating load is larger, and hence whose scuffing resistance is better than the test sample corresponding to Conventional Example 1. In the evaluation of the scuffing resistance index, the index of not less than 120 was evaluated as "double-circle (excellent)"; the index of not less than 105 and less than 120 was evaluated as "single-circle (good)"; the index of not less than 95 and less than 105 was evaluated as "triangle (relatively poor)"; and the index of less than 95 was evaluated as "cross mark (unacceptable)".

**Table 1A**

| | Composition (% by mass) | Area Ratio of Cu and/or Cu Alloy Phase (%) | | Vickers Hardness of Thermal Spray Coating (HV0.3) | Vickers Hardness of Cu or Cu-Al-Fe (HV0.01) |
|---|---|---|---|---|---|
| | | Sliding Surface Area Ratio | Cross-Sectional Area Ratio | | |
| Example 1 | 64Mo-35NiCr-1Cu | 0.5 | 0.1 | 542 | 160 |
| Example 2 | 60Mo-35NiCr-5Cu | 5.8 | 1.5 | 540 | 164 |
| Example 3 | 60Mo-30NiCr-10Cu | 10.5 | 4.8 | 501 | 158 |
| Example 4 | 59Mo-29NiCr-12Cu | 12.0 | 10.0 | 498 | 159 |
| Example 5 | 60Mo-35NiCr-5CuAl | 5.5 | 1.3 | 527 | 161 |
| Example 6 | 60Mo-30NiCr-10CuAl | 9.8 | 4.5 | 510 | 160 |
| Conventional Example 1 | 65Mo-35NiCr | - | - | 544 | - |
| Conventional Example 2 | 60Mo-30NiCr-10Cr3C2 | - | - | 384 | - |
| Comparative Example 1 | 64.5Mo-35NiCr-0.5Cu | 0.4 | 0.1 | 542 | 158 |
| Comparative Example 2 | 59Mo-28NiCr-13Cu | 15.8 | 10.6 | 490 | 162 |
| Comparative Example 3 | 64.5Mo-35NiCr-0.5CuAl | 0.4 | 0.1 | 541 | 157 |
| Comparative Example 4 | 59Mo-28NiCr-13CuAl | 15.5 | 10.3 | 495 | 155 |

**Table 1B**

| | Wear Resistance Index | | Wear Resistance Index of Mating Material | | Scuffing Resistance Index | | Overall Rating |
|---|---|---|---|---|---|---|---|
| | Index | Rating | Index | Rating | Index | Rating | |
| Example 1 | 104 | single-circle (good) | 89 | single-circle (good) | 105 | single-circle (good) | single-circle (good) |
| Example 2 | 111 | triangle (relatively poor) | 70 | double-circle (excellent) | 114 | single-circle (good) | single-circle (good) |
| Example 3 | 118 | triangle (relatively poor) | 58 | double-circle (excellent) | 128 | double-circle (excellent) | double-circle (excellent) |
| Example 4 | 119 | triangle (relatively poor) | 50 | double-circle (excellent) | 128 | double-circle (excellent) | double-circle (excellent) |
| Example 5 | 109 | single-circle (good) | 72 | double-circle (excellent) | 114 | single-circle (good) | double-circle (excellent) |
| Example 6 | 117 | triangle (relatively poor) | 60 | double-circle (excellent) | 128 | double-circle (excellent) | double-circle (excellent) |
| Conventional Example 1 | 100 | single-circle (good) | 100 | triangle (relatively poor) | 100 | triangle (relatively poor) | triangle (relatively poor) |
| Conventional Example 2 | 123 | cross mark (unacceptable) | 133 | cross mark (unacceptable) | 100 | triangle (relatively poor) | cross mark (unacceptable) |
| Comparative Example 1 | 102 | single-circle (good) | 100 | triangle (relatively poor) | 100 | triangle (relatively poor) | triangle (relatively poor) |
| Comparative Example 2 | 125 | cross mark (unacceptable) | 48 | double-circle (excellent) | 130 | double-circle (excellent) | cross mark (unacceptable) |
| Comparative Example 3 | 101 | single-circle (good) | 100 | triangle (relatively poor) | 100 | triangle (relatively poor) | triangle (relatively poor) |
| Comparative Example 4 | 127 | cross mark (unacceptable) | 47 | double-circle (excellent) | 130 | double-circle (excellent) | cross mark (unacceptable) |

### (Evaluation)

Score for overall evaluation was calculated based on each category by taking "double-circle (excellent)" as 2 points, "single-circle (good)" as 1 point and "triangle (relatively poor)" as 0 point. The scores of three categories, the wear resistance index, the wear resistance index of the mating material and the scuffing resistance index were added, and when the total score was 4 points or more, the overall evaluation was "double-circle (excellent)"; when the total score was 2-3 points, the overall evaluation was "single-circle (good)"; when the total score was 0-1 point, the overall evaluation was "triangle (relatively poor)"; and when one or more "cross marks (unacceptable)" were included in three categories, the overall evaluation was "cross mark (unacceptable)". It should be noted that those evaluated as "cross mark (unacceptable)" in the overall evaluation are out of the scope of the present invention.

It was confirmed that all Examples are superior in the scuffing resistance and the wear resistance of the mating material to Conventional Examples and Comparative Examples. In particular, the scuffing resistance becomes better when more amount of the Cu or Cu alloy phase is included, which suggests that the initial running-in property to the mating material of the Cu or Cu alloy phase has effectively works. It was also confirmed that the wear resistance of Examples is not substantially different from that of Conventional and Comparative Examples.

Next, the following Experiments 1 to 3 were carried out to investigate the influence of the porosity of the thermal spray coating on the wear resistance and the wear resistance of the mating material and the influence of the porosity on the adhesion to the piston ring base material.

### [Experiment 1]

An experiment was carried out to investigate the influence of the porosity of the thermal spray coating on the wear resistance and the wear resistance of the mating material. Thermal spray materials used in Example 1 etc. were prepared to form thermal spray coatings of 64Mo-35NiCr-1Cu and 60Mo-30NiCr-10Cu with a thickness of 300 µm on the sliding surface of a piston ring including boron cast iron. As for the two thermal spray coatings, plasma spraying was carried out under different conditions (voltage was changed within the range of 50 to 70 V; current was changed within the range of 450 to 500 A) to obtain thermal spray coatings having various porosity as shown in Table 2.

### (Measurement and Evaluation)

A cross-section obtained by cutting the piston ring by a plane parallel to the normal line of the sliding surface (or in the axial direction of the ring) was polished, and the image of the cross-section was taken at a magnification ofx200 with a metallographic microscope, followed by analyzing the image using an image analysis software, thereby measuring the porosity of the thermal spray coating. Polishing of the thermal spray coating was carried out using a series of progressively finer abrasive papers of 180, 240, 320, 600, 800 and 1200 grit, followed by buffing with 1.0 µm powder of alumina (aluminium oxide) for 20 seconds. The resulting polished surface was used as a sample for observation of the porosity. Images were taken at randomly selected five sites, and the mean value of the results obtained from analysis of those images was determined, by which the porosity was evaluated (evaluation was also carried out in the same manner in Experiments 2 and 3).

The wear resistance and the wear resistance of the mating material of the thermal spray coating used in the experiment were measured in the same manner as in Example 1 etc. described above, and evaluated as a wear resistance index and a wear resistance index of the mating material, respectively. The specific evaluation and the overall evaluation of each sample were also carried out according to the same criteria. As can be seen from the results shown in Table 2, those having a porosity of 0.62% to 7.71% were well evaluated. These results successfully support the description above that the preferred range of the porosity is from 0.5% to 8%. It is understood that an especially preferred wear resistance index and wear resistance index of the mating material can be obtained when the porosity is from 0.5% to 6%.

Score for overall evaluation was calculated based on each category by taking "double-circle (excellent)" as 2 points, "single-circle (good)" as 1 point and "triangle (relatively poor)" as 0 point. When the scores of two categories, the wear resistance index and the wear resistance index of the mating material, were added up to 2-4 points, the overall evaluation was "single-circle (good)"; and when the scores were added up to 0-1 point, the overall evaluation was "triangle (relatively poor)".

**Table 2**

| Composition (% by mass) | Porosity (%) | Wear Resistance Index | | Wear Resistance Index of Mating Material | | Overall Rating |
|---|---|---|---|---|---|---|
| | | Index | Rating | Index | Rating | |
| 64Mo-35NiCr-1Cu | 0.74 | 103 | single-circle (good) | 92 | single-circle (good) | single-circle (good) |
| | 2.15 | 104 | single-circle (good) | 89 | single-circle (good) | single-circle (good) |
| | 5.62 | 106 | single-circle (good) | 98 | single-circle (good) | single-circle (good) |
| | 7.71 | 109 | single-circle (good) | 107 | triangle (relatively poor) | triangle (relatively poor) |
| | 8.46 | 117 | triangle (relatively poor) | 115 | triangle (relatively poor) | triangle (relatively poor) |
| 60Mo-30NiCr-10Cu | 0.62 | 115 | triangle (relatively poor) | 60 | double-circle (excellent) | single-circle (good) |
| | 2.56 | 118 | triangle (relatively poor) | 58 | double-circle (excellent) | single-circle (good) |
| | 5.12 | 118 | triangle (relatively poor) | 61 | double-circle (excellent) | single-circle (good) |
| | 7.65 | 119 | triangle (relatively poor) | 72 | double-circle (excellent) | single-circle (good) |
| | 8.31 | 119 | triangle (relatively poor) | 81 | single-circle (good) | triangle (relatively poor) |

### [Experiment 2]

Next, an experiment was carried out to investigate the influence of the porosity of the thermal spray coating on the adhesive strength. In the same manner as in Experiment 1, a thermal spray material used in Example 1 etc. was prepared to form a thermal spray coating of 60Mo-30NiCr-10Cu with a thickness of 300 µm on the sliding surface of a piston ring including boron cast iron. As a comparative sample, a thermal spray coating of 65Mo-35NiCr not including Cu (the above-described Conventional Example 1) was formed with a thickness of 300 µm on the end face of a cylindrical specimen for measurement of adhesive strength (25 mm outer diameter, 40 mm length). As for the thermal spray coating, plasma spraying was carried out under different conditions (voltage was changed within the range of 50 to 70 V; current was changed within the range of 450 to 500 A) to obtain 5 types of thermal spray coatings having different porosity as shown in Table 3.

### (Measurement and Evaluation)

In the same manner as in Experiment 1, the porosity of the thermal spray coatings was measured on a polished cross-section of the cylindrical specimen on which a thermal spray coating was formed. The adhesive strength was measured in accordance with JIS H 8667. The end face of the cylindrical specimen on which the thermal spray coating was formed and the end face of a cylindrical specimen on which the thermal spray coating was not formed were bonded to each other with a thermosetting resin, and both ends of the thus combined tube were clamped with upper and lower chucks of a tensile testing machine to carry out a tensile test. In the tensile test, a load at which the thermal spray coating began to be peeled off from the boundary face of boron cast iron or splitting occurred within the thermal spray coating was determined at a tensile rate of 1 mm/min, and the determined load was divided by the area of the end face of the cylinder. Taking the value obtained for the 65Mo-35NiCr thermal spray coating as 1 (standard), the adhesive strength of 5 types of test samples having different porosity was compared with the standard. The results are shown in Table 3. Peeling which occurred at the boundary face of thermosetting resin and splitting which occurred within the thermosetting resin layer were ignored in the evaluation.

As can be seen from the results in Table 3, the adhesive strength was well evaluated in the case where the thermal spray coating used in the experiment had the porosity within the range from 0.71% to 7.52%. These results successfully support the description above that the preferred range of the porosity is from 0.5% to 8%. It is understood that a preferred adhesive strength can be obtained when the porosity is from 3% to 8%.

**Table 3**

| Composition (% by mass) | Porosity (%) | Adhesive Strength |
|---|---|---|
| 65Mo-35NiCr | - | 1 |
| 60Mo-30NiCr-10Cu | 0.71 | 1.2 |
| | 3.23 | 1.4 |
| | 4.90 | 1.5 |
| | 7.52 | 1.4 |
| | 8.51 | 0.9 |

### [Experiment 3]

Finding that there were a range of the porosity (0.5% to 6%) in which a good wear resistance and a good wear resistance of the mating material were obtained and a range of the porosity (3% to 8%) in which a good adhesive strength was obtained, the next experiment was carried out by firstly forming a 60Mo-35NiCr-5Cu thermal spray coating having a porosity of 5.43% and a thickness of 100 µm on the base material boron cast iron, and then forming thereon a 60Mo-35NiCr-5Cu thermal spray coating having a porosity of 2.46% and a thickness of 200 µm. Evaluation was carried out in the same manner as in Experiment 2 above to find that the adhesive strength was 1.5. Similar experiment was carried out to confirm that a good wear resistance, wear resistance of the mating material and adhesive strength can be obtained by forming the thermal spray coating with a porosity of 3% to 8% as an under layer and the thermal spray coating with a porosity of 0.5% to 6% as a surface layer.

### [Description of Symbols]

- 1: Piston Ring
- 2: Piston ring Base Material
- 3: Thermal Spray Coating
- 5: High-load Type Abrasion Tester
- 6: Test Samples
- 7: Rotating Piece
- 10: Rotary Type Flat Sliding Friction Tester
- 11: Specimen
- 12: Mating Material
- P: Load

## Claims

1. A piston ring (1) comprising
a thermal spray coating (3) formed end on a sliding surface of the piston ring, the thermal spray coating being formed by thermal spraying of a mixed powder including at least Mo powder, Ni-based self-fluxing alloy powder and Cu and/or Cu alloy powder, **characterized in that**
the thermal spray coating (3) at least includes 50 to 80 % by mass of Mo, 1 to 12 % by mass of Cu and/or Cu alloy, and a remainder being Ni-based self-fluxing alloy, and
the area ratio of Cu and/or Cu alloy phase that appears on the sliding surface is 0.5 to 15%.

2. The piston ring according to claim 1, wherein the area ratio of Cu and/or Cu alloy phase that appears on a cross-section of the thermal spray coating is 0.1 to 10%.

3. The piston ring according to claim 1 or 2, wherein the porosity of the thermal spray coating (3) is not more than 8%.

4. The piston ring according to any one of claims 1 to 3, wherein the Cu and/or Cu alloy phase has a flattened shape caused by being stretched in the in-plane direction in the sliding surface and being compressed in the direction normal to the sliding surface.

5. The piston ring according to any one of claims 1 to 4, wherein the piston ring is used for a ship.

## Patentansprüche

1. Kolbenring (1) aufweisend
eine auf einer Gleitoberfläche des Kolbenrings ausgebildete, thermisch aufgespritzte Beschichtung (3), wobei die thermisch aufgespritzte Beschichtung ausgebildet ist durch thermisch Spritzen eines Pulvergemisches, das mindestens Mo-Pulver, selbstfließendes Legierungspulver auf Ni-Basis und Cu-Pulver und/oder Cu-Legierungspulver enthält, **dadurch gekennzeichnet, dass**
die thermisch aufgespritzte Beschichtung (3) mindestens 50 bis 80 Masseprozent Mo, 1 bis 12 Masseprozent Cu und/oder Cu-Legierung und einen Rest, der die selbstfließende Legierung auf Ni-Basis ist, enthält, und
der Flächenanteil an Cu-Phase und/oder Cu-Legierungsphase, die an der Gleitoberfläche in Erscheinung tritt, 0,5 bis 15 % beträgt.

2. Kolbenring nach Anspruch 1, bei dem der Flächenanteil an Cu-Phase und/oder Cu-Legierungsphase, die an einem Querschnitt der thermisch aufgespritzten Beschichtung in Erscheinung tritt, 0,1 bis 10 % beträgt.

3. Kolbenring nach Anspruch 1 oder 2, bei dem die Porosität der thermisch aufgespritzten Beschichtung (3) nicht mehr als 8 % beträgt.

4. Kolbenring nach einem der Ansprüche 1 bis 3, bei dem die Cu-Phase und/oder Cu-Legierungsphase eine abgeflachte Form hat, die durch Strecken in Richtung der Ebene der Gleitoberfläche und durch Komprimieren in der zu der Gleitoberfläche senkrechten Richtung verursacht ist.

5. Kolbenring nach einem der Ansprüche 1 bis 4, wobei der Kolbenring für ein Schiff verwendet wird.

## Revendications

1. Garniture de piston (1) comprenant :
un revêtement par pulvérisation thermique (3) formé sur une surface de glissement de la garniture de piston, le revêtement par pulvérisation thermique étant formé par pulvérisation thermique d'une poudre mélangée incluant au moins une poudre Mo, une poudre d'alliage autodécapant à base de Ni, du Cu et/ou une poudre d'alliage Cu, **caractérisée en ce que**
le revêtement par pulvérisation thermique (3) inclut au moins 50 à 80 % en masse de Mo, 1 à 12% en masse de Cu et/ou d'alliage Cu, le restant étant un alliage autodécapant à base de Ni, et
le rapport de zone entre la phase de Cu et/ou d'alliage Cu apparaissant sur la surface de glissement est de 0,5 à 15%.

2. Garniture de piston selon la revendication 1, dans laquelle le rapport de zone entre la phase de Cu et/ou d'alliage Cu apparaissant sur une section du revêtement par pulvérisation thermique est de 0,1 à 10%.

3. Garniture de piston selon la revendication 1 ou 2, dans laquelle la porosité du revêtement par pulvérisation thermique (3) n'est pas supérieure à 8%.

4. Garniture de piston selon l'une quelconque des revendications 1 à 3, dans laquelle la phase de Cu et/ou d'alliage Cu présente une forme aplatie provoquée par son étirement dans la direction dans le plan dans la surface de glissement et par sa compression dans la direction normale par rapport à la surface de glissement.

5. Garniture de piston selon l'une quelconque des revendications 1 à 4, dans laquelle la garniture de piston est utilisée pour un bateau.
